# DEMANDE DE BREVET EUROPEEN

(11) **EP 1 450 237 A2**
(43) Date de publication de la demande: **25.08.2004**
(21) Numéro de dépôt: 04300078.5
(22) Date de dépôt: 12.02.2004
(51) Int. Cl.: G06F 1/00

(54) **Procédé de protection d'un algorithme exécuté par un circuit intégré**

(30) Priorité: 13.02.2003 FR 0301783
(71) Demandeur: STMicroelectronics S.A., 92120 Montrouge (FR)
(72) Inventeur: Teglia, Yannick, 13011 Marseille (FR)
(74) Mandataire: de Beaumont, Michel

(57) **Abrégé**

L'invention concerne un procédé anti-fraude consistant à rendre aléatoire la signature physique d'un circuit intégré exécutant un algorithme ou programme principal (Pg), consistant à prévoir dans ledit programme, un branchement à une adresse choisie aléatoirement d'un sous-programme (E) ayant au moins pour caractéristique que tout code opératoire qu'il contient conduit à une instruction incluse dans le même sous-programme à l'exception d'au moins une instruction de retour (RET) dans le programme principal appelant, de façon à rendre aléatoire le temps d'exécution total du programme principal.

## Description

La présente invention concerne le domaine des circuits intégrés et plus particulièrement la protection de données ou quantités secrètes manipulées par des circuits intégrés contre des tentatives de fraude visant à pirater ces données.

Un exemple d'application de la présente invention concerne le domaine des cartes à puce dans lesquelles des quantités secrètes servant à chiffrer ou crypter des données venant de l'extérieur sont contenues dans la puce de circuit intégré.

Parmi les fraudes possibles, l'invention se préoccupe plus particulièrement des tentatives de fraudes basées sur un examen de la signature d'un paramètre physique du circuit intégré exécutant une fonction mettant en oeuvre une quantité secrète. Cette signature physique sur le circuit intégré peut correspondre, par exemple, à l'évolution de sa température ou de sa consommation en courant. Les attaques par analyse statistique de consommation d'un circuit intégré sont connues sous les dénominations SPA (Simple Power Analysis) ou DPA (Differential Power Analysis). Ces attaques consistent à émettre des hypothèses sur la ou les clés manipulées alors que l'on connaît les données d'entrée dans l'algorithme (provenant de l'extérieur) ainsi que l'algorithme lui-même. Dans la mesure où l'algorithme est connu (il est déterministe, en ce sens qu'il manipule toujours les données de la même façon), on sait comment la quantité secrète est mélangée à la donnée d'entrée par cet algorithme. En faisant varier les données d'entrée sur la base d'une même hypothèse de clé, on peut analyser la consommation en courant du circuit intégré et obtenir une signature (trace) moyenne qui peut conduire à la découverte de la quantité secrète en tombant sur la bonne hypothèse.

Les attaques par analyse de la consommation de type DPA sont décrites, par exemple, dans l'article "Differential Power Analysis" de Kocher, Jaffe et Jun, publié par Stringer Verlag LNCS 1666, en 1999 dans le cadre de la conférence Crypto 99 (388 à 397).

Le défaut de sécurité de circuits intégrés, par exemple les cartes à puce, exécutant des algorithmes manipulant des quantités secrètes nuit considérablement au développement de produits intégrant de tels systèmes.

La présente invention vise à améliorer la sécurité des circuits intégrés manipulant des données secrètes contre des attaques par analyse de signature physique. Plus particulièrement, l'invention vise à proposer un procédé anti-fraude contre des attaques par analyse de signature physique d'un circuit intégré manipulant des données secrètes.

Pour atteindre ces objets et d'autres, la présente invention prévoit un procédé anti-fraude consistant à rendre aléatoire la signature physique d'un circuit intégré exécutant un algorithme ou programme principal, consistant à prévoir dans ledit programme un branchement à une adresse choisie aléatoirement d'un sous-programme ayant au moins pour caractéristique que tout code opératoire qu'il contient conduit directement ou indirectement à une instruction incluse dans le même sous-programme à l'exception d'au moins une instruction de retour dans le programme principal appelant, et que quelle que soit l'adresse (Addi) d'entrée dans le sous-programme, l'exécution de l'instruction de retour renvoie dans le programme principal appelant à l'instruction qui suit immédiatement celle ayant provoquée le branchement au sous-programme, de façon à rendre aléatoire le temps d'exécution total du programme principal.

Selon un mode de mise en oeuvre de la présente invention, le sous-programme a pour caractéristique que quelle que soit l'adresse d'entrée dans ce sous-programme, l'instruction de retour dans le programme principal appelant soit forcément atteinte.

Selon un mode de mise en oeuvre de la présente invention, ledit sous-programme a pour caractéristique de ne contenir aucun code opératoire générant une interruption.

Selon un mode de mise en oeuvre de la présente invention, ledit sous-programme a pour caractéristique de ne contenir aucune instruction de saut ou de branchement vers une adresse externe audit sous-programme.

Selon un mode de mise en oeuvre de la présente invention, ledit sous-programme a pour caractéristique de ne pas contenir de boucle infinie.

Selon un mode de mise en oeuvre de la présente invention, ledit sous-programme est placé, avec le code du programme principal, dans une mémoire morte.

L'invention prévoit également un circuit intégré d'exécution d'un programme déterministe.

Ces objets, caractéristiques et avantages, ainsi que d'autres de la présente invention seront exposés en détail dans la description suivante de modes de réalisation particuliers faite à titre non limitatif en relation avec la figure jointe qui illustre, de façon très schématique un mode de mise en oeuvre du procédé anti-fraude selon la présente invention.

Pour des raisons de clarté, seuls les éléments qui sont nécessaires à la compréhension de l'invention ont été représentés à la figure et seront décrits par la suite. En particulier, la constitution d'un circuit intégré ou microcontrôleur exécutant une fonction de sécurité de l'invention n'a pas détaillée, celle-ci pouvant être mise en oeuvre avec tout microcontrôleur connu. De plus, les instructions et codes opératoires utilisés pour la mise en oeuvre du sous-programme de sécurité de l'invention n'ont pas été détaillés, ce sous-programme mettant en oeuvre des instructions en elles-mêmes classiques.

Une caractéristique de la présente invention est de prévoir une désynchronisation d'un programme ou algorithme manipulant des quantités secrètes afin de rendre aléatoire sa durée d'exécution. Ainsi, d'une exécution à l'autre, la signature physique du circuit est différente de façon aléatoire, ce qui empêche un pirate éventuel de valider une hypothèse sur la quantité secrète, dans la mesure où la différence de signature ne provient pas uniquement de la différence entre les données d'entrée.

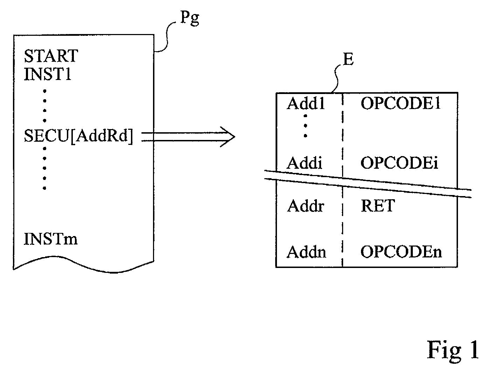

La figure 1 illustre, de façon très schématique, un mode de mise en oeuvre du procédé anti-fraude de l'invention.

L'invention s'applique, dans cet exemple, à un programme Pg manipulant des quantités secrètes. Ce programme débute par une instruction de départ (START), et comprend une succession d'instructions INST1 à INSTm exécutant l'algorithme de façon classique.

Selon l'invention, le programme Pg comprend au moins une instruction de branchement vers un sous-programme E. Cette instruction a été désignée par SECU. L'instruction SECU comporte un branchement sur le sous-programme E à une adresse AddRd sélectionnée de façon aléatoire.

Ainsi, lorsque le programme exécute l'instruction SECU, le microcontrôleur effectue un tirage aléatoire d'un nombre Rd compris entre deux valeurs constituant les bornes d'adresses du sous-programme E. L'adresse de branchement Addi (i correspond au nombre aléatoire Rd) dans le sous-programme E est donc aléatoire et change à chaque exécution de l'algorithme Pg.

Le sous-programme E contient des codes opératoires OPCODEi qui sont, selon l'invention, choisis dans un ensemble de codes respectant les conditions suivantes :
les codes opératoires OPCODEi font partie d'un ensemble clos, c'est-à-dire que, quel que soit le code opératoire exécuté dans le sous-programme E (à l'exception d'une instruction RET de retour dans le programme appelant Pg), le prochain code opératoire est aussi un code opératoire de ce sous-programme ;
les éventuelles instructions de saut ou d'appel à d'autres sous-programmes sont de préférence limitées à celles permettant de respecter l'ensemble clos ;
quelle que soit l'adresse d'entrée dans le sous-programme E, on finit toujours par tomber sur le code opératoire RET qui permet de sortir du sous-programme ;
le sous-programme E est dépourvu de boucles infinies ; et
de préférence, l'ensemble de codes opératoires ne contient pas d'instruction de génération d'interruption (afin d'éviter un arrêt de l'exécution de l'algorithme).

On a désigné ci-dessus les constituants du sous-programme comme étant des codes opératoires, surtout pour les distinguer des instructions du programme principal. En pratique, le sous-programme E contient comme tout programme des instructions constituées chacune d'un ou plusieurs codes opératoires traitant le cas échéant un ou plusieurs opérandes. Les accès dans le sous-programme E pourront donc se faire à des débuts d'instructions respectant les conditions énoncées ci-dessus. Ce qui est le plus important, c'est de ne pas tomber au milieu d'une instruction (sur un code opératoire d'une instruction complexe) et d'y rester bloqué. Pour le cas où certaines adresses du sous-programme E soient interdites en termes d'adresse d'entrée, on effectuera par exemple un test de validation du nombre aléatoire Rd. En variante, le nombre Rd est choisi aléatoirement dans un ensemble d'adresses possibles.

Pour le cas où les instructions ou code opératoires du sous-programme fassent appel à des opérandes, ceux-ci pourront être quelconques à l'exception de l'éventuelle quantité secrète elle-même.

Le sous-programme E est, par exemple, logé en mémoire morte avec le code du programme principal Pg.

La génération du sous-programme anti-fraude E peut être effectuée manuellement en respectant les conditions énoncées plus haut.

Selon un autre mode de mise en oeuvre, le programme E est généré automatiquement par un compilateur. L'utilisateur a ainsi la garantie de respect des conditions sur ce sous-programme. Le sous-programme est alors un ensemble de codes opératoires générés automatiquement, éventuellement de manière aléatoire, tout en respectant les règles prédéfinies.

Bien entendu, plusieurs appels à la fonction anti-fraude SECU peuvent être présents dans le programme principal Pg. De même, différents sous-programmes E peuvent être prévus pourvu que chacun d'entre eux soit de même nature et respecte l'accès aléatoire depuis le programme principal.

A titre d'exemple simplifié, le sous-programme le plus simple consiste à positionner l'instruction RET en dernière ligne du sous-programme et à ne prévoir que des instructions ou code opératoire NEXT de saut à l'adresse suivante. Ainsi, selon l'adresse à laquelle l'instruction SECU du programme principal envoie dans le sous-programme, la durée pour arriver à l'instruction de retour RET est différente.

Un avantage de la présente invention est qu'elle permet de rendre aléatoire la durée d'exécution d'un programme manipulant des quantités secrètes. Cela permet de rendre variable et aléatoire la signature en courant (ou autre signature physique) du circuit intégré exécutant ce programme.

Bien entendu, la présente invention est susceptible de diverses variantes et modifications qui apparaîtront à l'homme de l'art. En particulier, la sélection des codes opératoires autorisés pour le sous-programme de sécurité E est à la portée de l'homme du métier à partir des indications fonctionnelles données ci-dessus. De plus, l'adaptation de l'invention aux différents langages de programmation à partir de ces indications est à la portée de l'homme du métier. Il suffit de prévoir, dans les instructions utilisables, une instruction spécifique (SECU) qui fait un appel à l'ensemble de codes opératoires ou sous-programme propre à l'invention.

En outre, le sous-programme de sécurité peut contenir des instructions de saut vers un autre sous-programme qu'il soit ou non déterministe, pourvu que l'on revienne directement ou directement dans le programme principal.

## Revendications

1. Procédé anti-fraude consistant à rendre aléatoire la signature physique d'un circuit intégré exécutant un algorithme ou programme principal (Pg), **caractérisé en ce qu'**il consiste à prévoir dans ledit programme, un branchement à une adresse choisie aléatoirement d'un sous-programme (E) ayant au moins pour caractéristique :
que tout code opératoire qu'il contient conduit directement ou indirectement à une instruction incluse dans le même sous-programme à l'exception d'au moins une instruction de retour (RET) dans le programme principal appelant; et
que quelle que soit l'adresse (Addi) d'entrée dans le sous-programme, l'exécution de l'instruction de retour renvoie dans le programme principal appelant à l'instruction qui suit immédiatement celle ayant provoquée le branchement au sous-programme, de façon à rendre aléatoire le temps d'exécution total du programme principal.

2. Procédé selon la revendication 1, dans lequel le sous-programme (E) a pour caractéristique que quelle que soit l'adresse (Addi) d'entrée dans ce sous-programme, l'instruction de retour (RET) dans le programme principal appelant (Pg) soit forcément atteinte.

3. Procédé selon la revendication 1 ou 2, dans lequel ledit sous-programme (E) a pour caractéristique de ne contenir aucun code opératoire générant une interruption.

4. Procédé selon l'une quelconque des revendications 1 à 3, dans lequel ledit sous-programme (E) a pour caractéristique de ne contenir aucune instruction de saut ou de branchement vers une adresse externe audit sous-programme.

5. Procédé selon l'une quelconque des revendications 1 à 4, dans lequel ledit sous-programme (E) a pour caractéristique de ne pas contenir de boucle infinie.

6. Procédé selon l'une quelconque des revendications 1 à 5, dans lequel ledit sous-programme (E) est placé, avec le code du programme principal (Pg), dans une mémoire morte.

7. Circuit intégré d'exécution d'un programme déterministe, **caractérisé en ce qu'**il comporte les moyens pour exécuter le procédé anti-fraude selon l'une quelconque des revendications précédentes.
